# EUROPEAN PATENT APPLICATION

(11) **EP 3 664 045 A1**
(43) Date of publication of application: **10.06.2020**
(21) Application number: 18210626.0
(22) Date of filing: 06.12.2018
(51) Int. Cl.: G07C 9/00, B60R 25/24, F16J 15/00

(54) **ELECTRONIC KEY FOR A VEHICLE WITH A WATERSEAL FOAM**

(71) Applicant: Valeo Comfort and Driving Assistance, 94046 Créteil Cedex (FR)
(72) Inventor: PINTER, Tamas, 94046 Créteil CEDEX (FR)
(74) Representative: Delaval, Guillaume Laurent

(57) **Abstract**

The present invention relates to an electronic key (1) for a vehicle (2), comprising:
- a lower cover (10);
- an upper cover (11);
- a battery (12);
- an electronic printed card (13) arranged between said lower cover (10) and said upper cover (11);
Wherein said electronic key (1) further comprises:
- at least one waterseal foam (14) arranged in the electronic key (1) so that to obtain a watertightness of the electronic key (1);
- a battery cover (15).

## Description

### FIELD OF THE INVENTION

The present invention relates to an electronic key for a vehicle.

Such an electronic device may be used, but not exclusively, in a motor vehicle.

### BACKGROUND OF THE INVENTION

An electronic key for a vehicle, well-known by the man skilled in the art, comprises:
- a lower cover;
- an upper cover;
- a battery;
- an electronic printed card;
- a silicon membrane between the lower cover and the upper cover.

The lower cover and the upper cover are made of plastic. They are sealed together by a clip, which leads to the compression of the silicon membrane and to the watertightness of the electronic key.

One problem of this prior art is that there is a need to apply a high compression force to compress the silicon membrane in order to obtain the watertightness of the electronic key, which can lead to a deformation of the plastic parts of the electronic key and therefore to weaken the electronic key for watertightness.

### SUMMARY OF THE INVENTION

It is an object of the invention to provide an electronic key for a vehicle, which resolves the problem above-stated.

To this end, there is provided an electronic key for a vehicle, comprising:
- a lower cover;
- an upper cover;
- a battery;
- an electronic printed card arranged between said lower cover and said upper cover;

Wherein said electronic key further comprises:
- at least one waterseal foam arranged in the electronic key so that to obtain a watertightness of the electronic key;
- a battery cover.

As we will see in further details, the use of the waterseal foam instead of the silicon membrane, enables to reduce the compression force used to seal the lower cover and the upper cover together. Hence, it increases the robustness of the electronic key for watertightness.

According to non-limitative embodiments of the invention, the electronic key in accordance with the invention further comprises the following characteristics.

In a non-limitative embodiment, said electronic key comprises one waterseal foam arranged between said upper cover and said electronic printed card.

In a non-limitative embodiment, said waterseal foam is arranged within said upper cover.

In a non-limitative embodiment, said lower cover comprises a primary rib configured to compress said waterseal foam.

In a non-limitative embodiment, said waterseal foam is fixed to said upper cover with a watertight adhesive or some watertight glue.

In a non-limitative embodiment, said waterseal foam is fixed to said upper cover and to said electronic printed card with a watertight adhesive or some watertight glue.

In a non-limitative embodiment, said waterseal foam has a ring shape, or a frame shape which extends within a housing of said upper cover.

In a non-limitative embodiment, said electronic key comprises one waterseal foam arranged between said battery and said battery cover.

In a non-limitative embodiment, said waterseal foam is arranged within said battery cover.

In a non-limitative embodiment, said lower cover comprises a secondary rib configured to compress said waterseal foam.

In a non-limitative embodiment, said waterseal foam is fixed to said battery cover with a watertight adhesive or some watertight glue.

In a non-limitative embodiment, said waterseal foam is fixed to said battery cover and to said battery with a watertight adhesive or some watertight glue.

In a non-limitative embodiment, said waterseal foam has a ring shape, or a frame shape which extends within a housing of said battery cover.

In a non-limitative embodiment, the battery is arranged within said lower cover.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 depicts an assembled view of an electronic key for a motor vehicle, according to a non-limitative embodiment of the invention;
- Fig. 2 is a sectional view of the electronic key of Fig. 1, said electronic key comprising a lower cover, an upper cover, a battery, an electronic printed card, one waterseal foam, and a battery cover, according to a first non-limitative embodiment;
- Fig. 3 is a sectional view of the electronic key of Fig. 1, said electronic key comprising a lower cover, an upper cover, a battery, an electronic printed card, one waterseal foam, and a battery cover, according to a second non-limitative embodiment;
- Fig. 4 depicts the different parts of said electronic device of Fig. 1, said electronic key comprising a lower cover, an upper cover, a battery, an electronic printed card, two waterseal foams, and a battery cover, according to a third non-limitative embodiment;
- Fig. 5a is a bottom view of the lower cover of said electronic key of Fig. 1 to Fig. 4, according to a non-limitative embodiment;
- Fig. 5b is a bottom view of the lower cover of Fig. 5a, with the battery, according to a non-limitative embodiment;
- Fig. 5c is a top view of the lower cover of said electronic key of Fig. 1 to Fig. 4, according to a non-limitative embodiment;
- Fig. 6a is a top view of the upper cover of said electronic key of Fig. 1 to Fig. 4, according to a non-limitative embodiment;
- Fig. 6b is a bottom view of the upper cover of said electronic key of Fig. 1 to Fig. 4, according to a non-limitative embodiment;
- Fig. 6c is the bottom view of said upper cover of Fig. 6b with a waterseal foam, according to a non-limitative embodiment;
- Fig. 7a is a top view of the battery cover of said electronic key of Fig. 1 to Fig. 4, according to a non-limitative embodiment;
- Fig. 7b is a bottom view of the battery cover of said electronic key Fig. 1 to Fig. 4, according to a non-limitative embodiment;
- Fig. 7c is the bottom view of said battery cover of Fig. 7b with a waterseal foam, according to a non-limitative embodiment;
- Fig. 7d is the bottom view of said battery cover of Fig. 7c with the battery, according to a non-limitative embodiment.

### DESCRIPTION OF EMBODIMENTS OF THE INVENTION

In the following description, well-known functions or constructions by the man skilled in the art are not described in detail since they would obscure the invention in unnecessary detail.

The present invention relates to an electronic key 1 for a vehicle 2.

In a non-limitative embodiment, said vehicle 2 is a motor vehicle.

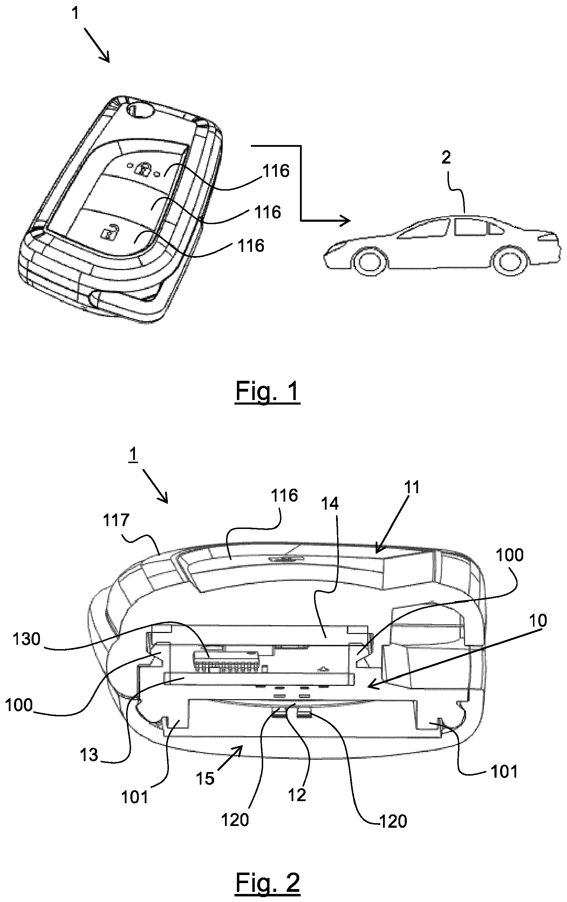

Such an electronic key 1 is illustrated in Fig.1 to Fig. 7d.

It comprises:
- a lower cover 10;
- an upper cover 11;
- a battery 12;
- an electronic printed card 13 arranged between said lower cover 10 and said upper cover 11;
- at least one waterseal foam 14 arranged in the electronic key 1 so that to obtain a watertightness of the electronic key 1;
- a battery cover 15.

The different parts of said electronic key 1 are further described hereinafter.

### • Lower cover 10

The lower cover 10 is illustrated in Fig. 2 to 4, and 5a to 5c.

In a non-limitative embodiment, it is made of a polymer material. In a non-limitative embodiment, it is made of plastic.

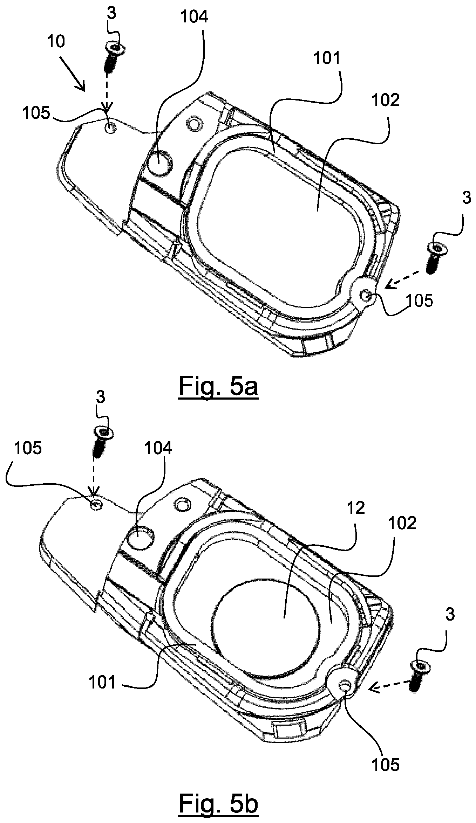

As illustrated in Fig. 5a and 5b, in a non-limitative embodiment, the lower cover 10 comprises a housing 102 for the battery 12.

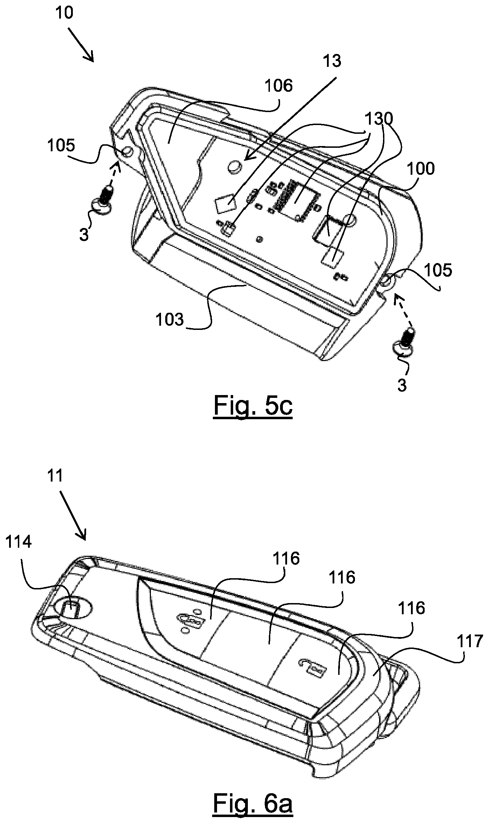

As illustrated in Fig. 5c, in a non-limitative embodiment, the lower cover 10 comprises a housing 106 for the electronic printed card 13.

As illustrated in Fig. 5c, in a non-limitative embodiment, the lower cover 10 comprises a primary rib 100 configured to compress the at least one waterseal foam 14. In particular, it is configured to compress the at least one waterseal foam 14 when this latter is arranged according to the first non-limitative embodiment, as illustrated in Fig. 2.

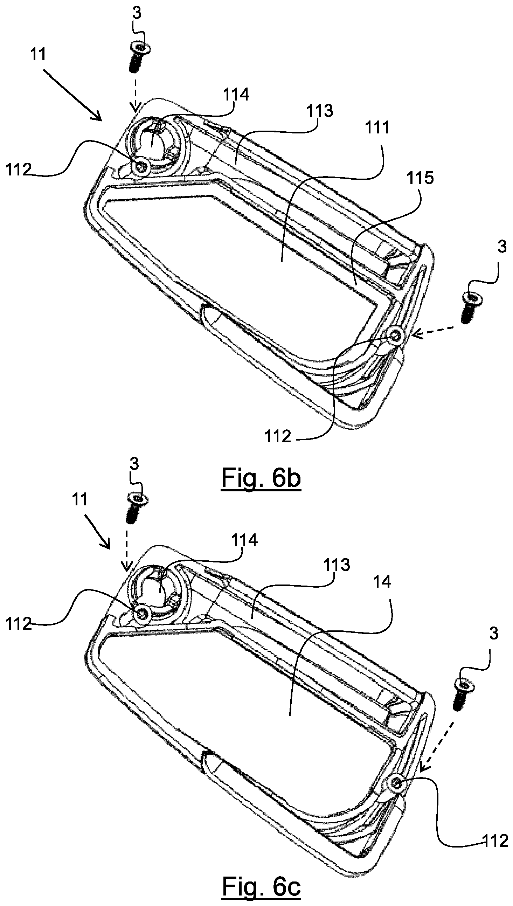

When the lower cover 10 and the upper cover 11 are sealed together, the primary rib 100 compresses the waterseal foam 14 which is arranged within said upper cover 11, as illustrated in Fig. 2 or in Fig. 6c.

In a non-limitative variant of embodiment, said primary rib 100 is arranged on the inside perimeter of said lower cover 10. In this cover, said primary rib 100 borders said housing 106 where part of the waterseal foam 14 is driven into when compressed. The primary rib 100 compresses the perimeter of the waterseal foam 14 which is arranged within said upper cover 11.

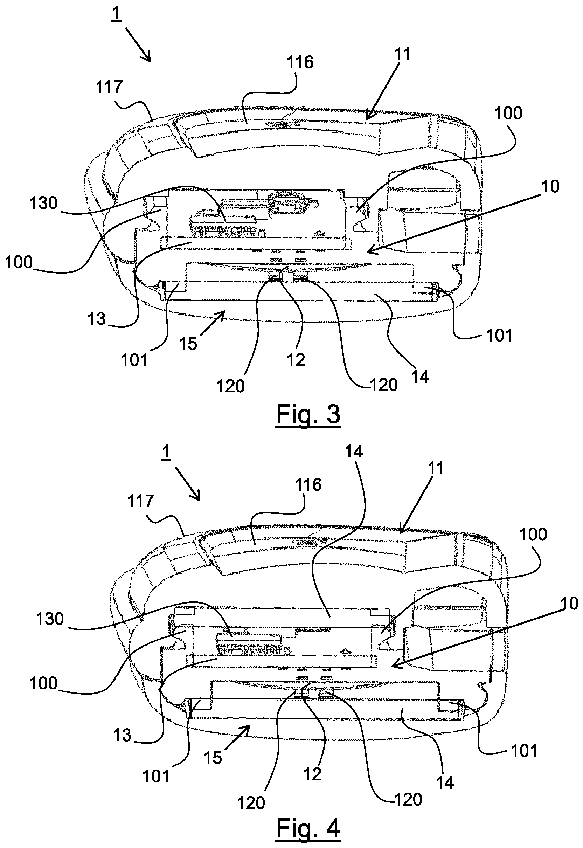

As illustrated in Fig. 5b, in a non-limitative embodiment, the lower cover 10 comprises a secondary rib 101 configured to compress the at least one waterseal foam 14. In particular, it is configured to compress the at least one waterseal foam 14 when this latter is arranged according to the second non-limitative embodiment, as illustrated in Fig. 3.

The secondary rib 101 is on the opposite face of the lower cover 10, where the primary rib 100 is.

Both primary rib 100 and secondary rib 101 belong to the lower cover 10. When the lower cover 10 and the upper cover 11 are sealed together, the secondary rib 101 compresses the waterseal foam 14 which is arranged within said battery cover 15, as illustrated in Fig. 3.

In a non-limitative variant of embodiment, said secondary rib 101 is arranged on the inside perimeter of said lower cover 10. In this cover, said secondary rib 101 borders said housing 102. The secondary rib 101 compresses the perimeter of the waterseal foam 14 which is arranged within said battery cover 15.

In a non-limitative embodiment illustrated in Fig. 5a to Fig. 5c, the lower cover 10 further comprises two sealing holes 105 configured to receive fixing means 3 in order to seal the lower cover 10 and the upper cover 11 together. The pressure applied by the fixing means 3 enable the waterseal foam 14 to be compressed by the primary rib 100 in order to obtain the watertightness of the electronic key 1. In a non-limitative example, the fixing means 3 are some screws.

In a non-limitative embodiment illustrated in Fig. 5a and Fig. 5b, the lower cover 10 further comprises a hole 104 for a push button (not illustrated) to be inserted. In a non-limitative embodiment illustrated in Fig. 5c, the lower cover 10 further comprises a first part 103 of a cover for a key bit (not illustrated) of the electronic key 1 to be inserted in. As well-known by the man skilled in the art, the push button enables the key bit to come out of the cover when a user of the vehicle 2 wants to manually unlock the vehicle 2.

### • Upper cover 11

The upper cover 11 is illustrated in Fig. 1, to 4, 6 and 7.

In a non-limitative embodiment, it is made of a polymer material. In a non-limitative embodiment, it is made of plastic.

The upper cover 11 comprises a frame 117. In a non-limitative embodiment, it is made of hard plastic.

In a non-limitative embodiment illustrated in Fig. 6a, the upper cover 11 comprises a plurality of buttons 116 framed by said frame 117. The buttons 116 permits to run different functions, such as some lock and unlock functions to lock/unlock some openings (doors, trunk etc.) of the vehicle 2. In the non-limitative illustrated example, a button 116 is used for a lock function, another one for an unlock function, and a last one for any other function such as a wire pressure diagnostic function.

The plurality of buttons 116 are each associated to a switch button (not-illustrated) which is connected to the electronic printed card 13.

In a non-limitative embodiment, the plurality of buttons 116 are separated buttons. They are composed of the same material than the frame 117.

In a non-limitative embodiment, the plurality of buttons 116 are integrated buttons. They are over-molded and their material is softer than the frame 117.

In a non-limitative embodiment illustrated in Fig. 6a, the upper cover 11 further comprises a hole 114 for the push button (not illustrated) to be inserted.

In a non-limitative embodiment illustrated in Fig. 6b, the upper cover 11 further comprises a primary rib 110 configured to compress said at least one waterseal foam 14.

In a non-limitative embodiment, it comprises a housing 111 for a waterseal foam 14. As illustrated in Fig. 6c, in a non-limitative embodiment, the waterseal foam 14 is arranged within said upper cover 11.

In a non-limitative embodiment, the upper cover 11 further comprises an edge 115 on the perimeter of said housing 111. When the lower cover 10 and the upper cover 11 are sealed together, the perimeter of the waterseal foam 14 will be compressed between said edge 115 and the primary rib 100 of the lower cover 10, as illustrated in Fig. 2 or Fig. 4.

In a non-limitative embodiment, said waterseal foam 14 is fixed to said upper cover 11 with a watertight adhesive or some watertight glue.

A pressure is applied on said lower cover 10 and upper cover 11 for the sealing. The pressure is applied via a gripping force. In a non-limitative embodiment, said gripping force is exerted via the fixing means 3.

The fixing means 3 are adapted to assemble all the components of the electronic key 1 together. Hence, in the non-limitative example of the screws 3, said screws 3 are adapted to go through said lower cover 10, said upper cover 11 and said upper cover 15.

In a non-limitative embodiment illustrated in Fig. 6b and Fig. 6c, the upper cover 11 further comprises two protruding thread 112 configured to receive two fixing means 3 in order to seal the lower cover 10 and the upper cover 11 together. Each protruding thread 12 is configured to be positioned in front of each hole 105 of said lower cover 10.

In a non-limitative embodiment illustrated in Fig. 6b and Fig. 6c, the upper cover 11 further comprises a second part 113 of a cover for a key bit (not illustrated) of the electronic key 1 to be inserted in and a hole 114 for the push button (not illustrated) to be inserted.

### • Battery 12

The battery 12 is illustrated in Fig. 2 to 4, and 7d.

The battery 12 is arranged between said lower cover 10 and said battery cover 15.

In a non-limitative embodiment illustrated in Fig. 5b, it is arranged within the lower cover 10.

The battery 12 is connected to the electronic printed card 13 so as to power supply said electronic printed card 13. The battery 12 comprises contacts 120 to make electrical contact with the electronic printed card 13.

The battery 12 is configured to be housed in the housing 102 of the lower cover 10 as illustrated in Fig. 5b.

In the second and third non-limitative embodiments of the electronic key 1, the battery 12 is arranged between said lower cover 10 and said waterseal foam 14 as illustrated in Fig. 3 (second embodiment) or Fig. 4 (third embodiment).

When the lower cover 10 and the upper cover 11 are sealed, the waterseal foam 14 is compressed onto the battery 12.

### • Electronic printed card 13

The electronic printed card 13 is illustrated in Fig. 2, to 4 and 5c.

In a non-limitative embodiment, the electronic printed card 13 is sandwiched between said lower cover 10 and said upper cover 11.

In a non-limitative embodiment, the electronic printed card 13 is arranged within the lower cover 10. In particular, it is arranged in the housing 106 of said lower cover 10 as illustrated in Fig. 5c.

The electronic printed card 13 comprises two faces which are opposed, one face faces the battery 12 and one face faces the housing 111 of said upper cover 11.

In a non-limitative embodiment, said electronic printed card 13 is a printed circuit board assembly PCBA, also called PCBA card.

In a non-limitative embodiment, the electronic printed card 13 comprises a plurality of electronic components 130. In non-limitative embodiments, said plurality of electronic components 130 are disposed on one face, or on the two faces. Said plurality components 130 comprise the switch buttons connected to the buttons 116 so as to enable the functions, such a lock and unlock to be performed.

### • Waterseal foam 14

The at least one Waterseal foam 14 is illustrated in Fig. 2 to 4, 6b, 7c and 7d. The at least one waterseal foam 14 is a soft material which adapts to the plastic deformation when the lower cover 10 and the upper cover 11 are sealed together.

The at least one waterseal foam 14 is arranged in the electronic key 1 so that to obtain a watertightness of the electronic key 1. It is arranged in the electronic key 1 according to three non-limitative embodiments.

It is to be noted that when it is compressed up to 10%, the at least one waterseal foam 14 permits to achieve the watertightness of the electronic key 1.

In a non-limitative embodiment, said waterseal foam 14 has a ring shape, or a frame shape.

In a non-limitative example, for a 33% compression pressure of 63kPa (Pascal), a force of 17,9 N (Newton) may be applied on a frame shape waterseal foam 14 which is of 284mm². This force is sufficient to obtain the watertightness of the electronic key 1.

In a non-limitative example, for a 33% compression pressure of 63kPa (Pascal), a force of 1,78 N (Newton) may be applied on a ring shape waterseal foam 14 which is of 28,26mm². This force is sufficient to obtain the watertightness of the electronic key 1.

### ∘ First embodiment

In a first non-limitative embodiment illustrated in Fig. 2 and Fig. 6c, the electronic key 1 comprises one waterseal foam 14 arranged between said upper cover 11 and said electronic printed card 13. In a non-limitative variant of embodiment illustrated in Fig. 6c, the waterseal foam 14 is arranged within said upper cover 11, in particular in the housing 111 of said upper cover 11. Said waterseal foam 14 is also called primary waterseal foam 14.

In a first non-limitative variant of embodiment, said waterseal foam 14 is fixed to said upper cover 11 with a watertight adhesive or some watertight glue. Hence, the waterseal foam 14 comprises an adhesive on one side, or is glued on one side. On the other side, the primary rib 100 of the lower cover 10 compressed said waterseal foam 14 on said edge 115 of said upper cover 11. Hence, the waterseal foam 14 is compressed around the PCBA card so that no water damages said PCBA card.

When the lower cover 10 comprises no primary rib 100, in a second non-limitative variant of embodiment, said waterseal foam 14 is fixed to said upper cover 11 and to said electronic printed card 13 with a watertight adhesive or some watertight glue. Hence, the waterseal foam 14 comprises an adhesive on two sides, or is glued on two sides. Hence, when the lower cover 10 and the upper cover 11 are assembled together by means of the fixing means 3, the pressure applied enables the waterseal foam 14 to be well fixed and well maintained between the upper cover 11 and said electronic printed card 13.

In a non-limitative embodiment, said waterseal foam 14 has a ring shape, or a frame shape which extends within the housing 111 of said upper cover 11. The ring shape permits to have a hole wherein the PCBA card may be integrated. The frame shape is illustrated in Fig. 6c. It permits to cover the whole PCBA card. When the lower cover 10 and the upper cover 11 are assembled together by means of the fixing means 3, part of the waterseal foam 14 goes into the housing 106 of said lower cover 10.

### ∘ Second embodiment

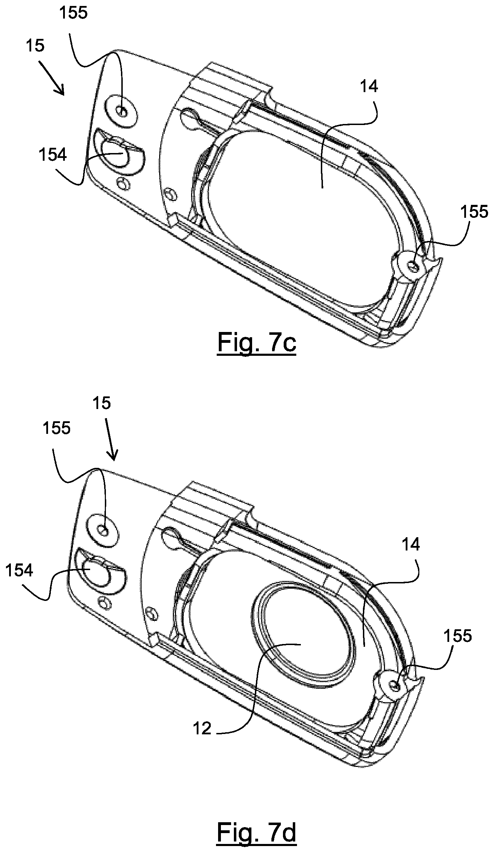

In a second non-limitative embodiment illustrated in Fig. 3 and Fig. 7c and Fig. 7d, the electronic key 1 comprises one waterseal foam 14 arranged between said battery 12 and said battery cover 15. In a non-limitative variant of embodiment illustrated in Fig. 7c and in Fig. 7d, the waterseal foam 14 is arranged within said battery cover 15.

Said waterseal foam 14 is also called secondary waterseal foam 14.

In a first non-limitative variant of embodiment, said waterseal foam 14 is fixed to said battery cover 15 with a watertight adhesive or some watertight glue. Hence, the waterseal foam 14 comprises an adhesive on one side, or is glued on one side. On the other side, the secondary rib 101 of the lower cover 10 compressed said waterseal foam 14 within said battery cover 15.

When the lower cover 10 comprises no secondary rib 101, in a second non-limitative variant of embodiment, said waterseal foam 14 is fixed to said battery cover 15 and to said battery 12 with a watertight adhesive or some watertight glue. Hence, when the lower cover 10 and the upper cover 11 are assembled together by means of the fixing means 3, the pressure applied enables the waterseal foam 14 to be well fixed and well maintained between the battery cover 15 and said battery 12.

In a non-limitative embodiment, said waterseal foam 14 has a ring shape, or a frame shape which extends within the housing 151 of said battery cover 15. The ring shape permits to have a hole wherein the battery 12 may be integrated. The frame shape is illustrated in Fig. 7c and 7d. It permits to cover the whole battery 12. When the lower cover 10 and the upper cover 11 are assembled together by means of the fixing means 3, part of the waterseal foam 14 goes into the housing 102 of said lower cover 10.

### ∘ Third embodiment

In a third non-limitative embodiment illustrated in Fig. 4, the first non-limitative embodiment and the second non-limitative embodiment are combined. Hence, the electronic key 1 comprises:
- one waterseal foam 14 arranged between said upper cover 11 and said electronic printed card 13; and
- one waterseal foam 14 arranged between said battery 12 and said battery cover 15.

### • Battery cover 15

The battery cover 15 is illustrated in Fig. 2, to 4, and 7a to 7d.

In a non-limitative embodiment, it is made of a polymer material. In a non-limitative embodiment, it is made of plastic.

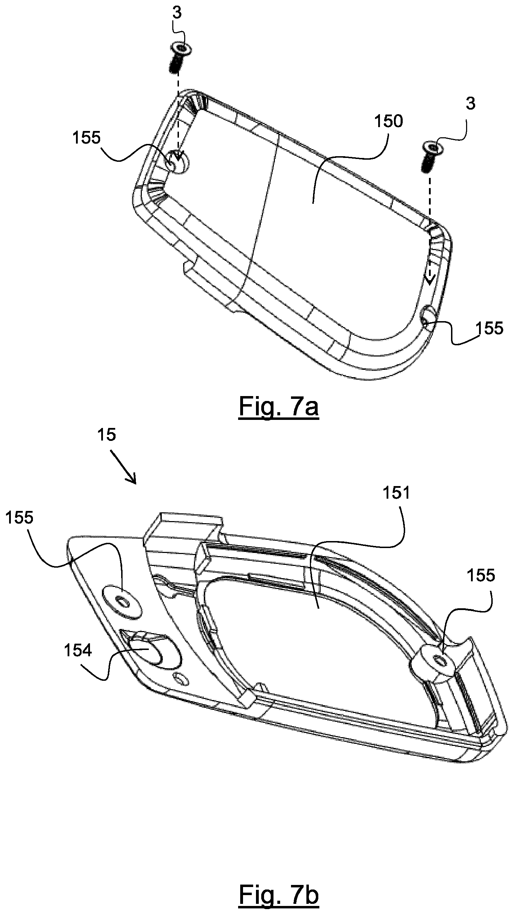

The battery cover 15 enables to close the electronic key 1. One side 150 illustrated in Fig. 7a is accessible by the user of the vehicle 2.

It is arranged to be fixed on the lower cover 10.

In a non-limitative embodiment, it comprises two holes 155 which are configured to receive the fixing means 3 in order to seal the lower cover 10 and the battery cover 15 together.

It is to be reminded that the same fixing means 3 enable to fix the lower cover 10, the battery cover 15 and the upper cover 11 together.

In a non-limitative embodiment, the battery cover 15 further comprises a hole 154 for the push button (not illustrated) to be inserted.

In a non-limitative embodiment illustrated in Fig. 7b, the battery cover 15 further comprises a housing 151 for a waterseal foam 14, as illustrated in Fig. 7c and 7d.

The battery 12 is in contact with said waterseal foam 14 as illustrated in Fig. 7d.

It is to be understood that the present invention is not limited to the aforementioned embodiments and variations and modifications may be made without departing from the scope of the invention. In the respect, the following remarks are made.

It is to be understood that the present invention is not limited to the aforementioned embodiments.

Hence, in a non-limitative embodiment, the waterseal foam 14 may be combined with a silicon membrane. In a non-limitative variant of said embodiment, the silicon membrane may be used between the lower cover 10 and the upper cover 11 for the electronic printed card 13, and the waterseal foam 14 for the battery 12, or vice versa.

Hence, some embodiments of the invention may comprise one or a plurality of the following advantages:
- it permits to reduce the force used to seal lower cover 10 and the upper cover 11 together which leads to less plastic deformation than the solution of the prior art or a solution with only over-molded soft plastic parts compression of the electronic key 1. Hence there will be less counterforce on the plastic parts of the electronic key 1 and the compression will be more efficient and thus the watertighness more robust;
- it permits to increase the watertightness of the electronic key 1 with the waterseal foam 14 as there is less plastic deformation;
- it permits to decrease the volume of the plastic used for the electronic key 1, because less counterforce will be on the plastic compared with a silicon membrane. Therefore the plastic volume can be optimized and with a reduced volume of the electronic key 1, one can make the same function;
- it significantly reduces the cost of the electronic key 1 as the foam is t significantly cheaper than the silicon membrane ;
- it permits the electronic key 1 to be more robust to resist to watertightness because the plastic parts will have less deformation during standard thermal shock test;
- as the waterseal foam 14 is softer then a silicon membrane, it permits to have more space for the electronic components of the card PCBA or for the battery 12.

Any reference sign in the following claims should not be construed as limiting the claim. It will be obvious that the verb "to comprise" and its conjugations do not exclude the presence of any other steps or components beside those defined in any claim. The word "a" or "an" preceding an component or step does not exclude the presence of a plurality of such components or steps.

## Claims

1. Electronic key (1) for a vehicle (2), comprising:
- a lower cover (10);
- an upper cover (11);
- a battery (12);
- an electronic printed card (13) arranged between said lower cover (10) and said upper cover (11);
Wherein said electronic key (1) further comprises:
- at least one waterseal foam (14) arranged in the electronic key (1) so that to obtain a watertightness of the electronic key (1);
- a battery cover (15).

2. Electronic key (1) according to claim 1, wherein said electronic key (1) comprises one waterseal foam (14) arranged between said upper cover (11) and said electronic printed card (13).

3. Electronic key (1) according to claim 2, wherein said waterseal foam (14) is arranged within said upper cover (11).

4. Electronic key (1) according to claim 2 or claim 3, wherein said lower cover (10) comprises a primary rib (100) configured to compress said waterseal foam (14).

5. Electronic key (1) according to any one of the previous claims 2 to 4, wherein said waterseal foam (14) is fixed to said upper cover (11) with a watertight adhesive or some watertight glue.

6. Electronic key (1) according to the previous claim 2 or claim 3, wherein said waterseal foam (14) is fixed to said upper cover (11) and to said electronic printed card (13) with a watertight adhesive or some watertight glue.

7. Electronic key (1) according to any one of the previous claims 2 to 6, wherein said waterseal foam (14) has a ring shape, or a frame shape which extends within a housing (111) of said upper cover (11).

8. Electronic key (1) according to any one of the previous claims 1 to 7, wherein said electronic key (1) comprises one waterseal foam (14) arranged between said battery (12) and said battery cover (15).

9. Electronic key (1) according to claim 8, wherein said waterseal foam (14) is arranged within said battery cover (15).

10. Electronic key (1) according to claim 8 or claim 9, wherein said lower cover (10) comprises a secondary rib (101) configured to compress said waterseal foam (14).

11. Electronic key (1) according to any one of the previous claims 8 to 10, wherein said waterseal foam (14) is fixed to said battery cover (15) with a watertight adhesive or some watertight glue.

12. Electronic key (1) according to claim 8 or claim 9, wherein said waterseal foam (14) is fixed to said battery cover (15) and to said battery (13) with a watertight adhesive or some watertight glue.

13. Electronic key (1) according to any one of the previous claims 8 to 12, wherein said waterseal foam (14) has a ring shape, or a frame shape which extends within a housing (151) of said battery cover (15).

14. Electronic key (1) according to any one of the previous claims 1 to 13, wherein the battery (12) is arranged within said lower cover (10).
